# EUROPEAN PATENT APPLICATION

(11) **EP 2 757 723 A1**
(43) Date of publication of application: **23.07.2014**
(21) Application number: 13305046.8
(22) Date of filing: 16.01.2013
(51) Int. Cl.: H04L 1/08, H04L 1/00, H04W 72/04, H04W 72/12, H04W 72/14

(54) **Robust downlink control channel communication based on repetition of scheduling grants over a PDCCH**

(71) Applicant: Alcatel Lucent, 75007 Paris (FR)
(72) Inventor: Baker, Matthew, Swindon, Wiltshire SN5 7DJ (GB); Wong, Shin Horng, Swindon, Wiltshire SN5 7DJ (GB)
(74) Representative: Leppard, Andrew John

(57) **Abstract**

A wireless telecommunications method, a computer program product and network nodes are disclosed. The method comprises: encoding, within a downlink control channel, an identical, repeating configuration message for an intended user equipment, the configuration message providing configuration information to enable the user equipment to access downlink traffic over a traffic channel, the configuration message being repeated for a fixed number of times within a corresponding number of sub-frames of the control channel. By repeating the configuration message within a number of sub-frames, the user equipment can combine the energy from successive repetitions in order to increase the likelihood that the configuration message can be decoded. It will be appreciated that such repetitions, therefore, increase the coverage provided in areas of high attenuation.

## Description

### FIELD OF THE INVENTION

The present invention relates to a wireless telecommunications method, a computer program product and network nodes.

### BACKGROUND

Wireless telecommunications systems are known. In a cellular system, radio coverage is provided to user equipment, for example, mobile phones, by areas known as cells. A base station is located in each cell to provide the radio coverage. User equipment in each cell receives information and data from the base station and transmits information and data to the base station.

Information and data transmitted by the base station to the user equipment occurs on channels of radio carriers known as downlink channels. Information and data transmitted by user equipment to the base station occurs on channels of radio carriers known as uplink channels. Although the deployment of base stations is largely controllable by the network operator, the deployment of user equipment is not. The deployment of user equipment within the network can cause unexpected consequences.

Accordingly, it is desired to provide an improved technique for communicating with user equipment.

### SUMMARY

According to a first aspect, there is provided a wireless telecommunications method, comprising: encoding, within a downlink control channel, an identical, repeating configuration message for an intended user equipment, the configuration message providing configuration information to enable the user equipment to access traffic over a traffic channel, the downlink configuration message being repeated for a fixed number of times within a corresponding number of sub-frames of the downlink control channel.

The first aspect recognises that an increasing problem with the deployment of user equipment is that they can be deployed in areas suffering from high attenuation. This high attenuation can cause the user equipment to be unable to decode configuration information, which is essential for being able to access appropriate traffic. This means that when deployed in these areas of high attenuation, the user equipment is effectively unable to send or receive traffic from the base station. The first aspect also recognises that existing standards fail to provide an adequate technique for proving this configuration information in high attenuation deployments, which means that user equipment implementing those standards are unable to communicate with the network during such deployment. The first aspect further recognises that whilst this is inconvenient for some user equipment when located in these high attenuation areas, coverage is restored when the user equipment moves to a lower attenuation area but that there is an emerging class of user equipment (such as machine type communication device such as, for example, smart meters) which are immobile once installed; for those user equipment no network coverage is provided.

Accordingly, a wireless telecommunications method is provided. The method may comprise the step of encoding identical and repeating configuration messages within a downlink control channel. The configuration messages may provide configuration information for user equipment for when accessing uplink or downlink traffic, or broadcast traffic transmitted over a corresponding uplink or downlink traffic channel or a broadcast channel . The configuration message may be repeated for a fixed, preconfigured or predetermined number of times, each of the repetitions may occur within a corresponding sub-frame of the downlink control channel. By repeating the configuration message within a number of sub-frames, the user equipment can combine the energy from successive repetitions in order to increase the likelihood that the configuration message can be decoded. It will be appreciated that such repetitions, therefore, increase the coverage provided in areas of high attenuation.

In one embodiment, the method comprises transmitting or receiving the traffic during at least one sub-frame related to the corresponding number of sub-frames. Accordingly, the traffic associated with the configuration message may be transmitted or received on one or more sub-frames related to the sub-frames within which the configuration message is repeated.

In one embodiment, the method comprises transmitting or receiving the traffic during a last one of the corresponding number of sub-frames. Accordingly, the traffic may be transmitted or received during one or more of the sub-frames within which the configuration message is repeated.

In one embodiment, the method comprises determining that the intended user equipment is in a poor reception area and the encoding occurs in response to the determining. Accordingly, such repetition may only occur when it is determined that the user equipment is in a poor coverage area. Otherwise, existing procedures for transmitting the control information may be used. It will be appreciated that different techniques for determining whether the user equipment is in a poor coverage area, such as through failure to establish communication using existing techniques.

In one embodiment, the determining occurs in response to a failure to complete a radio access channel RACH procedure with the user equipment. Accordingly, it may be determined that the user equipment is in a poor coverage area when a RACH procedure fails to complete.

In one embodiment, the method comprises increasing an aggregation applied to configuration messages encoded during the corresponding number of sub-frames. By applying an increased aggregation level to the configuration messages, the amount of energy which may be combined is increased, which improves the ability to decode these messages in a poor coverage area.

In one embodiment, the method comprises increasing the aggregation to a pre-configured aggregation level. Accordingly, the aggregation applied may be predetermined, predefined, preconfigured or fixed such that both the network node transmitting the messages and the network node receiving the messages are aware of the aggregation level being used.

In one embodiment, the aggregation comprises frequency domain aggregation of the configuration message.

In one embodiment, the method comprises, following encoding of the configuration messages within the corresponding number of sub-frames, encoding further, repeating configuration messages for the intended user equipment transmitted in a further corresponding fixed plurality of sub-frames, the further configuration messages having a decreased aggregation level. Accordingly, once the repeated messages have been transmitted, the aggregation applied may be reduced in order to increase resources available for other messages.

In one embodiment, the further corresponding fixed plurality of sub-frames is greater than the corresponding fixed plurality of sub-frames.

In one embodiment, the method comprises the step of commencing encoding of the configuration message within a sub-frame identified for the user equipment. Accordingly, a particular sub-frame may be designated for the transmission of the first repeating message. This first sub-frame may be associated with, and known to, the user equipment to enable the user equipment to commence decoding on the appropriate first sub-frame. It will be appreciated that this reduces the resources that would otherwise be required to provide a sliding window to identify the sub-frame within which the first transmission occurred. This also helps to spread the transmissions to different user equipment across different sub-frames within the radio frame.

According to a second aspect there is provided a base station, comprising: encoding logic operable to encode, within a downlink control channel, an identical, repeating configuration message for an intended user equipment, the configuration message providing configuration information to enable the user equipment to access traffic over a traffic channel, the configuration message being repeated for a fixed number of times within a corresponding number of sub-frames of the downlink control channel.

In one embodiment, the base station comprises logic operable to transmit or receive the traffic during at least one sub-frame related to the corresponding number of sub-frames.

In one embodiment, the logic is operable to transmit or receive the traffic during a last one of the corresponding number of sub-frames.

In one embodiment, the base station comprises determining logic operable to determine that the intended user equipment is in a poor reception area and the encoding logic is operable to encode the configuration messages in response to an indication provided by the determining logic.

In one embodiment, the determining logic is operable to determine that the intended user equipment is in the poor reception area in response to a failure to complete a RACH procedure with the user equipment.

In one embodiment, the encoding logic is operable to increase an aggregation applied to configuration messages encoded during the corresponding number of sub-frames. In one embodiment, the encoding logic is operable to increase the aggregation to a pre-configured aggregation level.

In one embodiment, the encoding logic is operable perform frequency domain aggregation of the configuration message.

In one embodiment, the encoding logic is operable, following encoding of the configuration messages within the corresponding number of sub-frames, to encode further, repeating configuration messages for the intended user equipment transmitted in a further corresponding fixed plurality of sub-frames, the further configuration messages having a decreased aggregation level.

In one embodiment, the further corresponding fixed plurality of sub-frames is greater than the corresponding fixed plurality of sub-frames.

In one embodiment, the encoding logic is operable to commence encoding of the configuration message within a sub-frame identified for the user equipment.

According to a third aspect there is provided a wireless telecommunications method, comprising: decoding, within a downlink control channel, identical, repeating configuration messages, each configuration message providing configuration information to enable user equipment to access traffic over a traffic channel, the configuration message being repeated for a fixed number of times within a corresponding number of sub-frames of the downlink control channel.

In one embodiment, the method comprises receiving or transmitting the traffic during at least one sub-frame related to the corresponding number of sub-frames.

In one embodiment, the method comprises receiving or transmitting the traffic during a last one of the corresponding number of sub-frames.

In one embodiment, the method comprises determining that the user equipment is in a poor reception area and the decoding occurs in response to the determining.

In one embodiment, the determining occurs in response to a failure to complete a RACH procedure.

In one embodiment, the method comprises decoding the configuration messages encoded during the corresponding number of sub-frames with an increased aggregation level.

In one embodiment, the method comprises decoding the configuration messages encoded during the corresponding number of sub-frames with an increased a pre-configured aggregation level,

In one embodiment, the aggregation comprises frequency domain aggregation of the configuration message.

In one embodiment, the method comprises, following decoding of the configuration messages within the corresponding number of sub-frames, decoding further, repeating configuration messages transmitted in a further corresponding fixed plurality of sub-frames, the further configuration messages having a decreased aggregation level.

In one embodiment, the further corresponding fixed plurality of sub-frames is greater than the corresponding fixed plurality of sub-frames.

In one embodiment, the method comprises the step of commencing decoding of the configuration message within a sub-frame identified for the user equipment.

According to a fourth aspect there is provided user equipment, comprising: decoding logic operable to decode, within a downlink control channel, identical, repeating configuration messages, each configuration message providing configuration information to enable the user equipment to access traffic over a traffic channel, the configuration message being repeated for a fixed number of times within a corresponding number of sub-frames of the downlink control channel.

In one embodiment, the user equipment comprises logic operable to receive or transmit the traffic during at least one sub-frame related to the corresponding number of sub-frames.

In one embodiment, the logic is operable to receive or transmit the traffic during a last one of the corresponding number of sub-frames.

In one embodiment, the user equipment comprises determining logic operable to determine that the user equipment is in a poor reception area and the decoding logic is operable in response to an indication from the determining logic that the user equipment is in a poor reception area.

In one embodiment, the determining logic operable to determine that the user equipment is in a poor reception area in response to a failure to complete a RACH procedure.

In one embodiment, the decoding logic operable to decode the configuration messages encoded during the corresponding number of sub-frames with an increased aggregation level.

In one embodiment, the decoding logic operable to decode the configuration messages encoded during the corresponding number of sub-frames with an increased a pre-configured aggregation level.

In one embodiment, the aggregation comprises frequency domain aggregation of the configuration message.

In one embodiment, the decoding logic operable, following decoding of the configuration messages within the corresponding number of sub-frames, to decode further, repeating configuration messages transmitted in a further corresponding fixed plurality of sub-frames, the further configuration messages having a decreased aggregation level.

In one embodiment, the further corresponding fixed plurality of sub-frames is greater than the corresponding fixed plurality of sub-frames.

In one embodiment, the decoding logic operable to decode the configuration message within a sub-frame identified for the user equipment.

According to a fifth aspect there is provided a computer program product operable, when executed on a computer, to perform the method steps of the first or third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

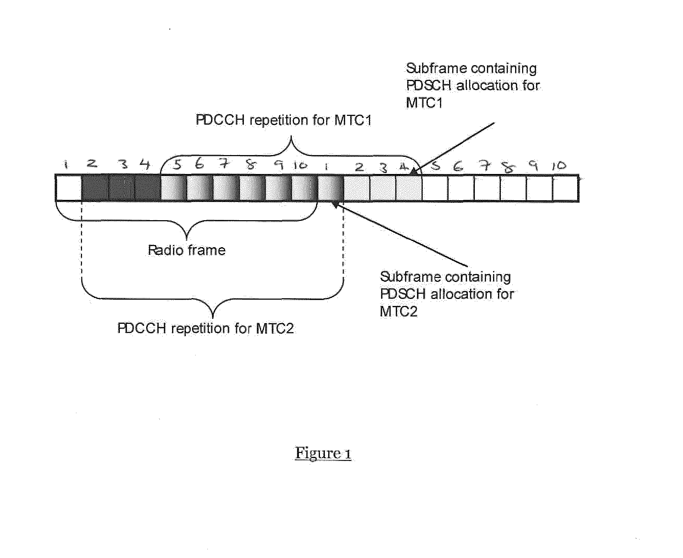

Figure 1 illustrates example encoding on the PDCCH for initial access of those user equipment following a determination that the user equipment are in a poor coverage area according to one embodiment.

### DESCRIPTION OF THE EMBODIMENTS

### Overview

Before discussing the embodiments in any more detail, first an overview will be provided. As mentioned above, a difficulty with deploying some types of user equipment is that they are located in areas which suffer from high losses such as, for example, high penetration losses due to their position within a building and therefore it is difficult for the user equipment to communicate with the network. One example of such user equipment is a machine type communication device that is used by a machine such as, for example, a smart utility meter. Some of the smart utility meters are located in the basement or other areas which suffer from high attenuation of radio signals and it is desired to extend the coverage of these devices by 20db.

Before the user equipment can access the network, it needs to be able to read a downlink control channel which includes downlink confguration information. One example of such a downlink control channel is the physical downlink control channel (PDCCH) or enhanced physical downlink control channel (EPDCCH), which are used to allocate resources on the physical downlink shared channel (PDSCH) and/or the physical uplink shared channel (PUSCH) which are used to transfer messages to the user equipment. User equipment that fails to detect and decode PDCCH or EPDCCH would not be able to receive or transmit any messages from or to the network.

Existing techniques utilise aggregation levels which correspond to a number of aggregated control channel elements (CCEs) or enhanced aggregated control channel elements (eCCEs) which are aggregated typically in the frequency domain in a given sub-frame. The higher the aggregation level, the more control channel elements are used for the transmission of a control message and, therefore, the more robust the messages is for reception which enables the message to be received in areas of high attenuation and so therefore increases the coverage area. However, this approach to transmitting the PDCCH or EPDCCH is insufficient for user equipment in high penetration loss areas.

Accordingly, embodiments provide techniques where the aggregated messages are repeated a number of times within sub-frames within the downlink control channel. Typically, the control channel message is repeated in multiple, successive sub-frames with a fixed aggregation level in time and frequency for the initial access such as, for example, for the scheduling of the radio resource connection set-up messages and common messages. That is to say that the location and number of the repeated messages, together with the level of frequency aggregation is fixed, predetermined or preconfigured since there is no other opportunity for the base station to inform the user equipment of the formatting of these messages. The messages repeated in sub-frames and aggregated across the frequency domain are identical to enable the signal energy for these messages to be combined so that the message can be decoded. Once this message has been correctly decoded, it is possible for the user equipment to access messages being sent on PDCCH and/or EPDCH to enable downlink traffic to be received or to enable uplink traffic to be send, the downlink traffic is typically located in the sub-frame of the last repetition of the downlink configuration message. It will be appreciated that it is possible to transmit traffic on a different sub-frame, but this would require some additional information to advise the user equipment which sub-frame contains that traffic. The aggregation in time and frequency for PDCCH and/or EPDCCH can then be reconfigured to other values after the initial access in order to reduce the load on resources. Hence, it will be appreciated that the configuration messages may be downlink configuration messages and/or uplink configuration messages.

### Activation

Typically, the repetition of the configuration messages is only activated when it is detected that the user equipment is in a poor coverage area. This is because this approach consumes a relatively large amount of resources and there is no need to use this approach if the radio condition for the user equipment does not require the extra repetitions. It is possible to detect that the user equipment is in a poor coverage area by, for example, detecting that the user equipment first attempts to access the network using random access channel (RACH) resources and, if it fails to access the network, it would use RACH resources from a different set (sometimes referred to as an accumulative set) which is designed for random access in the extended, poor coverage region. If the user equipment fails to access the network using conventional RACH resources and instead uses resources in the accumulative set, this means that the user equipment is in a poor or extended coverage region and so the fixed time and frequency aggregation levels for signals transmitted over PDCCH and/or EPDCCH is used. Likewise, if the user equipment needs to use an enhanced physical broadcast channel format, then it will also likely be in the extended coverage region and the repetition in time and frequency of PDCCH and EPDCCH will occur for common messages.

### Repetition

The repetition or aggregation level in time is implemented by repeating in time the configuration messages transmitted over PDCCH and/or EPDCCH using CCEs or eCCEs with the same indices as those used in the first sub-frame in which the message was first transmitted and with the same format (such as, for example, modulation, coding, content). In other words, identical messages are repeated over subsequent sub-frames. Those successive sub-frames are typically immediately adjacent sub-frames, as will be described in more detail below. However, it will be appreciated that the repetition may also occur with intervening sub-frames not carrying the message. Such repetition in time enables the user equipment to combine the signal energy from the messages repeated in each sub-frame to provide for improved decoding of this message.

### Aggregation

Typically, low frequency domain aggregation levels (for example, aggregation level and 2 - which represents the number of CCEs in a sub-frame) are not used for the initial access or common messages of user equipment identified as being in a poor coverage area. Instead, embodiments use higher aggregation levels (for example, 8, 16, 32 or more). This reduces the search space used by the user equipment to decode PDCCH and/or EPDCCH. Typically, the level of aggregation used will be fixed, predetermined or preconfigured so that both the transmitting base station and the receiving user equipment will know the level of aggregation used.

### Message Commencement

In some embodiments the location of the sub-frame within which the repeated control message is first transmitted is specified on a per-user equipment basis. That is to say that the boundary of the time domain repetition of the messages transmitted over PDCCH/EPDCCH is specified such that a control channel message can only start in certain sub-frames, which typically occur periodically. For example, this boundary of repetition can be specified as a function of the RACH resource (for example, the accumulative set used to send the initial access or the SI-RNTI (for common messages)). The boundary specifies to the user equipment the location in the time domain of the first repetition.

### Downlink Traffic Prevention

Previous techniques allocate resources for transmission of downlink traffic within the same sub-frame where the downlink configuration information is sent. For example, resources are allocated on PDSCH or PUSCH for data transmissions within the same sub-frame as that carrying messages on PDCCH and/or EPDCCH. In embodiments, the messages are transmitted using the PDSCH and/or PUSCH resource indicated in the messages transmitted on PDCCH and/or EPDCCH in the sub-frame where the last repetition of the repeated message occurs. This avoids the need to include additional information in the downlink control message (such as a DCI message) to indicated the sub-frame in which the downlink traffic is scheduled. It also avoids the need to reserve resources in sub-frames for every message repetition.

### Example to User Equipment Encoding

Figure 1 illustrates example encoding on the PDCCH for initial access of those user equipment following a determination that the user equipment are in a poor coverage area. Both the user equipment and the base station are preconfigured to assume the following encoding parameters: that a frequency domain aggregation level of 16 or 32 is applied; that the message is repeated in 10 subsequent sub-frames (ie: 10 repetitions); and the sub-frame within which the first repetition occurs (ie: the boundary of the PDCCH time repetition) is proportional to the accumulative set used. That is to say that the sub-frame containing the first repetition is N Mod 10, where N is the Nth accumulative set used by the user equipment for successful RACH transmission.

As MTC1 and MTC2 are two user equipment located in the basement at a cell edge, it is determined that both require enhanced downlink encoding and MTC1 randomly selects accumulative set 5, whilst MTC2 randomly selects accumulative set 2.

Accordingly, transmissions for MTC1 will occur on sub-frame 5 whilst transmissions for MTC2 will start on sub-frame 2. MTC1 will combine the PDCCH signals from 10 consecutive sub-frames starting at sub-frame 5 and then blind decode these with a frequency domain aggregation level of 16 and 32. Similarly, MTC2 will combine PDCCH signals from 10 consecutive sub-frames starting from sub-frame 2 and then blind decode these with a frequency domain aggregation level of 16 and 32.

MTC1's PDSCH resources are allocated in the fourth sub-frame (the sub-frame containing the last PDCCH repetition) in the following radio frame. Similarly MTC2's PDSCH resource is allocated in the first sub-frame (that is the sub-frame containing the last PDCCH repetition) of the following radio frame.

After receiving the initial access messages in this format (for example, the radio resource connection set up messages) from the network, the network can reconfigure the user equipment aggregation to other values. For example, the network can use the RRC connection set-up message to reconfigure the user equipment to decode for example, 15 repetitions and a lower range of frequency domain aggregation (for example, between an aggregation level of 2 and 16).

Accordingly, it can be seen that embodiments allow the PDCCH/EPDCCH channels to be extended to cater for user equipment located in, for example, the basements of buildings at the cell edge.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A wireless telecommunications method, comprising:
encoding, within a downlink control channel, an identical, repeating configuration message for an intended user equipment, said configuration message providing configuration information to enable said user equipment to access traffic over a traffic channel, said configuration message being repeated for a fixed number of times within a corresponding number of sub-frames of said downlink control channel.

2. The method of claim 1, comprising transmitting said traffic during at least one sub-frame related to said corresponding number of sub-frames.

3. The method of claim 1 or 2, comprising transmitting said traffic during a last one of said corresponding number of sub-frames.

4. The method of any preceding claim, comprising determining that said intended user equipment is in a poor reception area and said encoding occurs in response to said determining.

5. The method of claim 4, where said determining occurs in response to a failure to complete a RACH procedure with said user equipment.

6. The method of any preceding claim, comprising increasing an aggregation applied to configuration messages encoded during said corresponding number of sub-frames.

7. The method claim 6, comprising increasing said aggregation to a pre-configured aggregation level.

8. The method of claim 6 or 7, wherein said aggregation comprises frequency domain aggregation of said downlink configuration message.

9. The method of any preceding claim, comprising, following encoding of said configuration messages within said corresponding number of sub-frames, encoding further repeating configuration messages for said intended user equipment transmitted in a further corresponding fixed plurality of sub-frames, said further configuration messages having a decreased aggregation level.

10. The method of claim 9, wherein said further corresponding fixed plurality of sub-frames is greater than said corresponding fixed plurality of sub-frames.

11. The method of any preceding claim, comprising the step of commencing encoding of said configuration message within a sub-frame identified for said user equipment.

12. A base station, comprising:
encoding logic operable to encode, within a downlink control channel, an identical, repeating configuration message for an intended user equipment, said configuration message providing configuration information to enable said user equipment to access traffic over a traffic channel, said configuration message being repeated for a fixed number of times within a corresponding number of sub-frames of said downlink control channel.

13. A wireless telecommunications method, comprising:
decoding, within a downlink control channel, identical, repeating configuration messages, each configuration message providing configuration information to enable user equipment to access traffic over a traffic channel, said configuration message being repeated for a fixed number of times within a corresponding number of sub-frames of said downlink control channel.

14. User equipment, comprising:
decoding logic operable to decode, within a downlink control channel, identical, repeating configuration messages, each configuration message providing configuration information to enable said user equipment to access traffic over a traffic channel, said configuration message being repeated for a fixed number of times within a corresponding number of sub-frames of said downlink control channel.

15. A computer program product operable, when executed on a computer, to perform the method steps of any one of claims 1 to 11 or 13.
